# EUROPEAN PATENT APPLICATION

(11) **EP 4 340 474 A1**
(43) Date of publication of application: **20.03.2024**
(21) Application number: 21947407.9
(22) Date of filing: 28.06.2021
(51) Int. Cl.: H04W 56/00, H04B 5/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); CUI, Shengjiang, Dongguan, Guangdong 523860 (CN); HU, Rongyi, Dongguan, Guangdong 523860 (CN)
(74) Representative: Mewburn Ellis LLP
(86) International application number: PCT/CN2021/102787
(87) International publication number: WO 2023/272443

(57) **Abstract**

Embodiments of the discourse provide a method and a device for wireless communication. The method includes the following. A terminal device receives a power supply signal, where the power supply signal contains an indication information indicating synchronization information. The terminal device performs synchronization based on the synchronization information or determines uplink timing or downlink timing based on the synchronization information, so that the terminal device can obtain synchronization information while obtaining power, thereby realizing synchronization between the terminal device and a network.

## Description

### TECHNICAL FIELD

Embodiments of the present disclosure relate to the field of communication, and more specifically to a method and a device for wireless communication.

### BACKGROUND

With the increase of applications in the field of communication, the types of terminals in the field of communication also increase, for example, at present, many communication industries have high requirements on the power consumption of the terminal device. The application of battery-free passive terminals or semi-passive terminals has become a key technology in many communication industries.

The above passive terminals, or even some semi-passive terminals, or active terminals, may not be able to use battery power in some cases, need to perform backscatter to transmit data, and are also not able to realize a timing function by means of a crystal oscillator and so on, i.e., not able to realize synchronization between the terminal devices and a network. Therefore, how to realize synchronization between this type of terminal devices and the network is a technical problem to be solved in this disclosure.

### SUMMARY

Embodiments of the present disclosure provide a method and a device for wireless communication, so that a terminal device can obtain synchronization information while obtaining power, thereby realizing synchronization between the terminal device and a network.

In a first aspect, a method for wireless communication is provided. The method for wireless communication includes the following. A terminal device receives a power supply signal, where the power supply signal contains indication information indicating synchronization information. The terminal device performs synchronization based on the synchronization information or determines uplink timing or downlink timing based on the synchronization information.

In a second aspect, a method for wireless communication is provided. The method for wireless communication includes the following. A terminal device receives a power supply signal, where the power supply signal contains indication information indicating triggering information. The terminal device performs transmission of the first channel based on the triggering information.

In a third aspect, a method for wireless communication is provided. The method for wireless communication includes the following. A communication device transmits a power supply signal, where the power supply signal contains indication information indicating synchronization information.

In a fourth aspect, a method for wireless communication is provided. The method for wireless communication includes the following. A communication device transmits a power supply signal, where the power supply signal contains indication information indicating triggering information.

In a fifth aspect, a terminal device is provided. The terminal device includes a processor and a memory. The memory is configured to store a computer program. The processor is configured to invoke a computer program from the memory and to run the computer program to perform the methods in the implementations of the first aspect and the second aspect.

In a sixth aspect, a communication device is provided. The communication device includes a processor and a memory. The memory is configured to store a computer program. The processor is configured to invoke the computer program from the memory and to run the computer program to perform the methods in the implementations of the third aspect and the fourth aspect.

In a seventh aspect, an apparatus is provided. The apparatus is configured to perform the methods in the implementations of the first aspect to the fourth aspect.

Specifically, the apparatus includes a processor. The processor is configured to invoke the computer program from the memory and run the computer program to cause a device equipped with the apparatus to perform the methods in implementations of the first aspect to the fourth aspect.

In an eighth aspect, a computer-readable storage medium is provided. The computer-readable storage medium is configured to store a computer program. The computer program is operable with a computer to implement the methods in implementations of the first aspect to the fourth aspect.

In a ninth aspect, a computer program product is provided. The computer program product includes computer program instructions. The computer program instructions enable the computer to perform the methods in the implementations of the first aspect to the fourth aspect.

In a tenth aspect, a computer program is provided. The computer program is operable with a computer to perform the methods in implementations of the first aspect to the fourth aspect.

In the technical solution of the present disclosure, the network device may make the indication information indicating the synchronization information be carried in the power supply signal, so that a terminal device can obtain synchronization information while obtaining power, thereby realizing synchronization between the terminal device and a network. Further, the indication information carried in the power supply signal may directly indicate the synchronization information, so that the terminal device does not need to wait for the synchronization information, thereby reducing the power consumption of the terminal device and reducing synchronization delay. Alternatively, the indication information carried in the power supply signal may indicate the location of the synchronization information, so that the terminal device can receive the indication information at the location of the synchronization information and does not need to perform continuous blind detection for the indication information, thereby also reducing power consumption of the terminal device.

### BRIEF DESCRIPTION OF THE DRAWINGS

FIG. 1 is a schematic diagram of a communication system provided in embodiments of the present disclosure.
FIG. 2 is a schematic diagram of a radio frequency identification (RFID) system provided in the present disclosure.
FIG. 3 is a diagram illustrating a principle of backscatter communication provided in the present disclosure.
FIG. 4 is a diagram illustrating a principle of power harvesting provided in embodiments of the present disclosure.
FIG. 5 is a diagram illustrating a circuit principle of resistive load modulation provided in embodiments of the present disclosure.
FIG. 6 is a flow chart of a method for wireless communication provided in an embodiment of the present disclosure.
FIG. 7 is a schematic diagram illustrating a correlation relationship between the location of indication information and locations of synchronization information provided in embodiments of the present disclosure.
FIG. 8 is a schematic diagram illustrating time domain locations of periodic indication information provided in embodiments of the present disclosure.
FIG. 9 is a diagram illustrating a waveform of synchronization information encoded with Manchester coding provided in embodiments of the present disclosure.
FIG. 10 is a schematic diagram illustrating triggering indication information provided in embodiments of the present disclosure.
FIG. 11 is a flow chart of a method for wireless communication provided in another embodiment of the present disclosure.
FIG. 12 is a schematic diagram of a terminal device 1200 provided in embodiments of the present disclosure.
FIG. 13 is a schematic diagram of a terminal device 1300 provided in embodiments of the present disclosure.
FIG. 14 is a schematic diagram of a communication device 1400 provided in embodiments of the present disclosure.
FIG. 15 is a schematic diagram of a communication device 1500 provided in embodiments of the present disclosure.
FIG. 16 is a schematic structural diagram of a communication device 1600 provided in embodiments of the present disclosure.
FIG. 17is a schematic structural diagram of an apparatus provided in embodiments of the present disclosure.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments of the disclosure. Based on the embodiments of the disclosure, all other embodiments obtained by those of ordinary skill in the art without creative effort shall fall within the protection scope of the disclosure.

It may be understood that the terms "system" and "network" in this disclosure are often used interchangeably. The term "and/or" in this disclosure is simply an illustration of an correlation relationship of associated objects, indicating that three relationships may exist, for example, A and/or B, which may indicate the existence of A alone, A and B together, and B alone. In addition, the character "/" in this disclosure generally indicates that associated objects are in an "or" relationship.

It can be understood that the "indication" referred to in embodiments of the disclosure may be a direct indication, an indirect indication, or an indication indicating an associated relation. For example, A indicates B, which can mean that A indicates B directly, e.g., B can be obtained through A, can mean that A indicates B indirectly, e.g., A indicates C, and B can be obtained through C, or can mean that A and B have an associated relation.

In illustration of embodiments of the disclosure, the term "correspondence" may represent a direct correspondence or indirect correspondence between the two, may represent an associated relation between the two, or may represent a relation of indicating and being indicated, a relation of configuring and being configured, or other relations.

The embodiments of the disclosure can be applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a universal mobile telecommunication system (UMTS), a wireless local area network (WLAN), a wireless fidelity (Wi-Fi), a next-generation communication system, a cellular internet of things (IoT), a cellular passive IoT, or other communication systems.

The cellular IoT derives from the combination of a cellular mobile communication network and IoT. Cellular passive IoT is also referred to as passive cellular IoT, which is a combination of network devices and passive terminals. A passive terminal in cellular passive IoT can communicate with other passive terminals via a network device. Alternatively, the passive terminal may perform a device to device (D2D) communication. A network device only needs to transmit a carrier signal, namely a power supply signal, to power the passive terminal.

Generally, a conventional communication system supports a limited number of connections and therefore is easy to implement. However, with development of the communication technology, the mobile communication system can not only support conventional communication, but also support, for example, D2D communication, machine to machine (M2M) communication, machine type communication (MTC), and vehicle to vehicle (V2V) communication. Embodiments of the present disclosure also can be applied to these communication systems.

Optionally, the communication system in embodiments of the present disclosure may be applied in a carrier aggregation (CA) scenario, a dual connectivity (DC) scenario, and a standalone (SA) scenario.

A spectrum applied is not limited in embodiments of the disclosure. For example, embodiments of the disclosure can be applied to a licensed spectrum and also can be applied to an unlicensed spectrum.

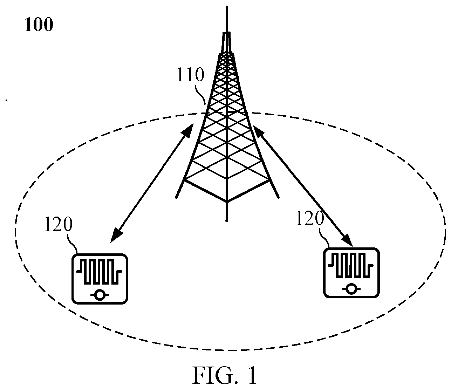

Exemplarily, a communication system 100 applied in embodiments of the disclosure is illustrated in FIG. 1. The communication system 100 may include a network device 110, the network device 110 can communicate with a terminal device 120 (or called a communication terminal or a terminal). The network device 110 can provide communication coverage to a specific geographical area and can communicate with terminal devices in the coverage range.

FIG. 1 exemplarily illustrates a network device and two terminal devices. Optionally, the communication system 100 may include multiple network devices. The other number of terminal devices may be included in a coverage range of each of the multiple network devices, which will not be limited in embodiments of the disclosure.

Optionally, the communication system 100 may further include a network controller, a mobility management entity (MME), or other network entities, which will not be limited in embodiments of the disclosure.

It may be understood that a device with a communication function in a network/system in embodiments of the disclosure can be called a communication device. Taking the communication system 100 illustrated in FIG. 1 as an example, communication devices may include the network device 110 and the terminal device 120 that have communication functions, and the network device 110 and the terminal device 120 may be the above-mentioned devices, which will not be repeated herein. The communication devices may further include other devices in the communication system 100, e.g., a network controller, an MME, or other network entities, which will not be limited in embodiments of the disclosure.

In embodiments of the disclosure, each embodiment is illustrated in conjunction with a terminal device and a network device, where the network device may be an access point (AP) in the WLAN, a base transceiver station (BTS) in the GSM or CDMA system, or a NodeB (NB) in the WCDMA system. Alternatively, the network device may be an evolutional NodeB (eNB or eNodeB), a relay station, an AP, an in-vehicle device, or a wearable device in the LTE system, or a generation NodeB (gNB) in the NR network, or a network device in the future evolved PLMN.

In embodiments of the disclosure, the network device can serve a cell, and the terminal device can communicate with the network device through transmission resources (e.g., frequency-domain resources or spectrum resources) for the cell, where the cell may be a cell corresponding to the network device (e.g., a base station). The cell may belong to a macro base station or a base station corresponding to a small cell, where the small cell may include a metro cell, a micro cell, a pico cell, a femto cell, or the like. These small cells have features of small coverage ranges and low transmission power and are suitable for providing high-speed data transmission services.

A terminal in embodiments of the disclosure may refer to a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. Alternatively, the terminal device may be a station (ST) in the WLAN, a cellular radiotelephone, a cordless telephone, a session initiation protocol (SIP) telephone, a wireless local loop (WLL) station, or a personal digital assistant (PDA). Alternatively, the terminal device may be a device with wireless communication functions such as a handheld device, a computing device, other processing devices coupled with a wireless modem, an in-vehicle device, or a wearable device. Alternatively, the terminal device may be a terminal device in a next-generation communication system such as an NR network, a terminal device in a future evolved public land mobile network (PLMN), or a zero-power device, etc.

As an example but not a limitation, in embodiments of the disclosure, the terminal device may also be a wearable device. The wearable device can also be called a wearable smart device, which is a collective name of wearable devices intelligently designed and developed by applying wearable technology to daily wear, such as glasses, gloves, watches, clothing, shoes, etc. The wearable device is a portable device that can be worn directly on the body or integrated into the clothing or accessories of a user. The wearable device not only is a hardware device but also can realize powerful functions through software support, data interaction, and cloud interaction. Broadly speaking, the wearable smart device includes a device that has full functions and is large in size. The device can realize all or part of functions without relying on a smartphone, e.g., a smart watch, smart glasses, or the like, and includes a device that only focuses on a certain application function and needs to be used with other devices such as a smartphone, e.g., all kinds of smart bracelets and smart jewelry for physical sign monitoring or the like.

It may be understood that a zero-power device may be understood as a device with power consumption lower than preset power consumption, including, for example, a passive terminal, and even a semi-passive terminal, etc. In recent years, the zero-power device may have a wide application scenario. A typical example of the zero-power device may be a device with radio frequency identification (RFID), where RFID is a technology that can realize contactless automatic transmission and identification of tag information by means of spatial coupling of radio frequency (RF) signals. An RFID tag is also known as an RF tag or a tag. According to different ways of power supply, tags can be classified into active tags, passive tags, and semi-passive tags. The active tag is powered by a battery and consists of a battery, a memory, and an antenna. Different from a mode in which passive RF is activated, the active tag transmits information in a set frequency band before the battery runs out. The passive tag does not support a built-in battery. When the passive tag gets close to a reader, the tag is within a near-field range formed by antenna radiation of the reader, and an antenna of the tag generates induced current through electromagnetic induction. The induced current drives a chip circuit in the tag. The chip circuit transmits identification information stored in the tag to the reader via the antenna in the tag. The semi-passive tag may be referred to as a semi-active tag, which inherits the advantages of a passive tag including small size, lightweight, low price, and long service life. When the reader does not access the tag, few circuits in the tag are powered by a built-in battery. When the reader accesses the tag, an RFID circuit is powered by the built-in battery to increase the range that the tag can be read, thereby improving the reliability of communication.

It may be understood that the passive tag is generally understood as a zero-power device. In some cases, the semi-passive tag is also understood as a zero-power device.

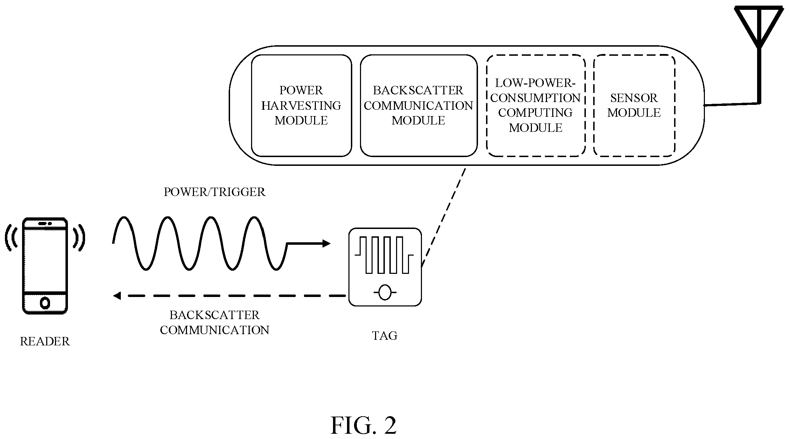

RFID is a wireless communication technology. FIG. 2 is a schematic diagram of an RFID system provided in the present disclosure. As illustrated in FIG. 2, the most basic RFID system is composed of two parts: a tag and a reader/writer. The tag consists of a coupling component(s) and a chip. Each tag has a unique electronic code and is placed on a target object to be measured to mark the target object. The reader not only can read information in the tag but also can write the information into the reader, and further can provide power for the tag to perform communication. As illustrated in FIG. 2, the tag receives an RF signal transmitted by the reader in the case where the tag enters an electromagnetic field formed by the reader. The passive tag transmits information in the tag through power obtained from the electromagnetic field in the space. The reader reads and decodes the information to recognize the tag.

Communication based on the zero-power device is referred to as zero-power communication, and may include the following key technologies.

### 1. Backscatter Communication

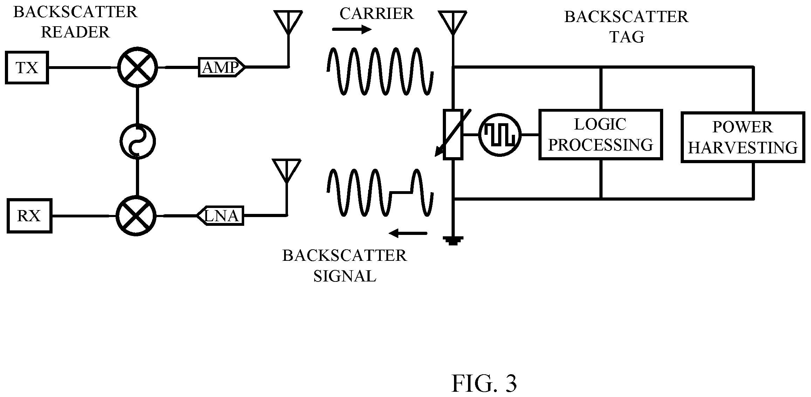

FIG. 3 is a diagram illustrating a principle of backscatter communication provided in the present disclosure. As illustrated in FIG. 3, a zero-power device, i.e., a backscatter tag, receives a carrier signal transmitted by a backscatter reader, and harvests power through an RF power harvesting module, i.e., a power harvesting module, thus providing power to a low-power-consumption module, i.e., a logic processing module in FIG. 3, to modulate the carrier signal and to perform backscatter.

It may be understood that since the carrier signal transmitted by the backscatter reader is used to provide power to the backscatter tag, the carrier signal is also referred to as a power supply signal, and based on this, the power supply signal involved in the present disclosure is also referred to as a carrier signal in some cases, and the carrier signal is also referred to as a power supply signal in some cases.

It may be understood that the principle of backscatter communication illustrated in FIG. 3 is illustrated based on a backscatter tag and a backscatter reader, but actually, any device having a backscatter communication function and any device that can transmit a carrier signal for supplying power can implement backscatter communication.

The main features of the principle of backscatter communication are as follows.
(1) The terminal device does not actively transmit signals and implements backscatter communication by modulating a carrier signal.
(2) The terminal device does not rely on a traditional active power amplifier transmitter and uses a low-power-consumption computing unit, thereby greatly reducing hardware complexity.
(3) Battery-free communication can be implemented with power harvesting.

Therefore, the terminal device herein may be a zero-power device (e.g., a passive terminal, or even a semi-passive terminal), Alternatively, the terminal device may be a non-zero-power device, such as an ordinary terminal, but the ordinary terminal may in some cases implement backscatter communication.

### 2. RF Power Harvesting

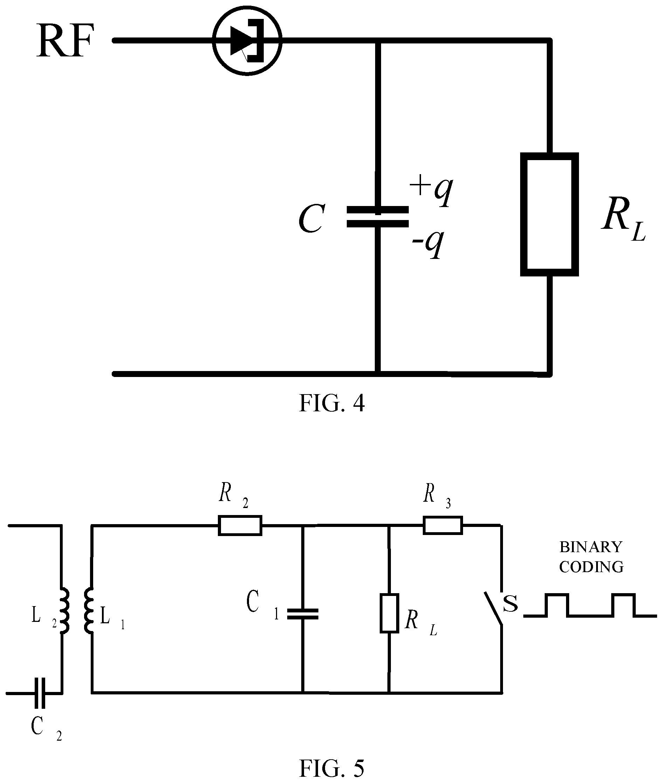

FIG. 4 is a diagram illustrating a principle of power harvesting provided in embodiments of the present disclosure. As illustrated in FIG. 4, the terminal device can utilize an RF power harvesting module to harvest power of spatial electromagnetic waves through electromagnetic induction to drive a load circuit (including a low-power-consumption computing unit, a sensor(s), and so on), thereby realizing battery-free communication.

### 3. Load modulation

Load modulation is a manner often used by the tag to transmit data to the reader. With the load modulation, an electrical parameter(s) of a tank circuit in the tag is modulated according to a clock rate of a data stream to consequently change the magnitude and phase of impedance of the tag, thus completing modulation. The load modulation is mainly implemented in two ways: resistive load modulation and capacitive load modulation.

In resistive load modulation, a resistor called a load modulation resistor is connected in parallel with a load. The resistor is switched on and off at the clock rate of a data stream. The on and off of switch S are controlled by binary data coding. A circuit principle of resistive load modulation is illustrated in FIG. 5 below. In capacitive load modulation, a capacitor is connected in parallel with a load, replacing the load modulation resistor controlled by binary data coding in FIG. 5.

### 4. Coding

Data transmitted by the tag may be expressed as binary 1 and 0 obtained using different coding. The RFID system generally uses one of the following coding: non return zero (NRZ) coding, Manchester coding, unipolar return zero (RZ) coding, differential binary phase (DBP) coding, Miller coding, and differential coding. In general, different pulse signals are used to express 0 and 1.

As mentioned above, passive terminals, or even some semi-passive terminals or active terminals, cannot be powered by a battery in some cases, may transmit data through backscatter, and also cannot implement a timing function through a crystal resonator and so on, namely cannot perform synchronization between the terminal device and the network. Therefore, how to perform synchronization between this type of terminal devices and the network side is a technical problem that needs to be solved in the disclosure.

Technical solutions of the disclosure are described in detail as follows.

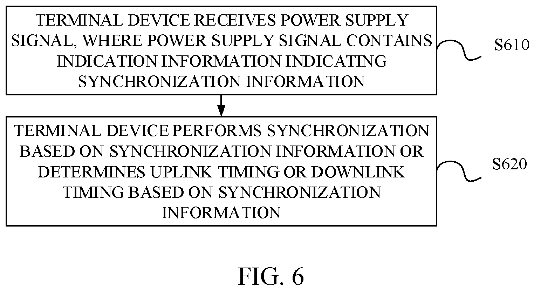

FIG. 6 is a flow chart of a method for wireless communication provided in an embodiment of the present disclosure. The method may be implemented by a terminal device with a backscatter communication function. The terminal device may be a zero-power device, such as a passive terminal, or even a semi-passive terminal. Alternatively, the method may be implemented by a non-zero-power device, i.e., an ordinary device, where the ordinary terminal may perform backscatter communication in some cases and cannot realize synchronization through its own timing component such as a crystal resonator in some cases. As illustrated in FIG. 6, the method includes the following operations.

At S610, the terminal device receives a power supply signal, where the power supply signal contains indication information indicating synchronization information.

At S620, the terminal device performs synchronization based on the synchronization information, or determines uplink timing or downlink timing based on the synchronization information.

It may be understood that the technical solution of the disclosure is applicable to various communication systems, such as a cellular IoT, a cellular passive IoT, or even a D2D communication system. Based on this, the power supply signal herein may be generated by a device that is currently required to communicate with the terminal device, for example, in cellular passive IoT, the power supply signal may be generated by a network device. Alternatively, the power supply signal herein may not be generated by a device that is currently required to communicate with the terminal device, for example, in cellular passive IoT, the power supply signal may be generated by other terminal devices, as long as the other terminal devices can generate the power supply signal. The following will illustrate the technical solution of the disclosure by taking that the network device generates the power supply signal as an example.

Optionally, the network device may transmit the power supply signal with or without intermission, which is not limited in the disclosure.

Optionally, when the network device transmits the power supply signal with intermission, a time interval between transmissions of the power supply signal may be predefined or configured, which is not limited in the disclosure.

It may be understood that since the network device also needs to communicate with the terminal device, there may be other signals for data or information transmission. The power supply signal and the signal used for information transmission may be the same signal or two separate signals, which are not limited in the disclosure. For example, in cellular passive IoT, the power supply signal and the signal used for information transmission are two separate signals. In RFID technology, the power supply signal and the signal used for information transmission are the same signal.

Optionally, when the power supply signal and the signal for information transmission are two separate signals, the two signals may or may not be transmitted in the same frequency band.

Optionally, a coding manner adopted by the network device to code the indication information may be but is not limited to pulse-interval encoding (PIE), NRZ coding, Manchester coding, unipolar RZ coding, DBP coding, Miller encoding, or differential coding.

It may be understood that the power supply signal is an RF carrier signal, and the network device may modulate the carrier information to carry encoded indication information. Commonly used modulation manners may include, but are not limited to: amplitude shift keying (ASK), frequency shift keying (FSK), phase shift keying (PSK), etc. ASK may include double-sideband amplitude shift keying (DSB-ASK), single-sideband amplitude shift keying (SSB-ASK), and phase-reversal amplitude shift keying (PR-ASK).

Optionally, the indication information indicates the synchronization information directly or indirectly, which is not limited herein.

The following will illustrate the case where the indication information directly indicates the synchronization information:

Optionally, the manner in which the indication information directly indicates the synchronization information may include but is not limited to the following implementation manners.

Implementation manner 1: the indication information carries the synchronization information.

Implementation manner 2: the indication information indicates the synchronization information through a correlation between the indication information and the synchronization information.

It may be understood that in the NR system, according to an SSB index and half frame indication information carried in a synchronization signal block (SSB) received by the terminal device, the terminal device can determine the time domain location of the SSB in a radio frame to realize frame timing. A system frame number (SFN) of the radio frame, i.e., the radio frame number, can be obtained based on a master information block (MIB) information carried in a physical broadcast channel (PBCH). As for the terminal device involved in the technical solution of the disclosure, since power for demodulating the synchronization information and the MIB by the terminal device depends on the power supply signal, and in particular, the terminal device needs to take a certain amount of time to harvest power to demodulate the PBCH, the time at which synchronization is realized may be affected in the case where the terminal device realizes synchronization through SSB detection. Based on this, in the present disclosure, the terminal device may make the indication information directly indicating the synchronization information be carried in the power supply signal.

The following illustrates implementation manner 1.

It may be understood that in the case where the indication information carries only the synchronization information, the indication information is the synchronization information.

The following illustrates implementation manner 2.

In the case where at least one indication information has a correlation with at least one synchronization information, the network device only needs to transmit the indication information, and the terminal device can determine the synchronization information based on the correlation between the indication information and the synchronization information.

Optionally, the correlation relationship between the at least one indication information and the at least one synchronization information may be a one-to-one correspondence, a one-to-many correspondence, or a many-to-one correspondence, which is not limited in the disclosure.

The following illustrates the case where the indication information indirectly indicates the synchronization information.

As mentioned above, in the NR system, according to the SSB index and the half frame indication information carried in the SSB received by the terminal device, the terminal device can determine the time domain location of the SSB in the radio frame to realize frame timing. The SFN of the radio frame, i.e., the radio frame number, can be obtained based on the MIB information carried in the PBCH.

In the case where the NR system supports the terminal device involved in the technical solution of the present disclosure, the terminal device can perform synchronization according to existing synchronization information in the NR system. In this case, the power supply signal can supply power for the terminal device to receive the synchronization information. The terminal device can receive the synchronization information after harvesting power. Since the terminal device cannot know the specific location of the synchronization information before receiving the synchronization information, the terminal device can only receive the synchronization information by means of blind detection. Since the terminal device needs to harvest power supplied through the power supply signal before carrying out each blind detection, the terminal device is unable to perform continuous blind detection. Therefore, in the present embodiment, the power supply signal may carry the indication information, where the indication information indicates the location of the synchronization information. The location includes at least a time domain location. The indication information serves as a triggering signal used for triggering the terminal device to detect the synchronization information. The indication information is transmitted to the terminal device before transmission of the synchronization information, so that a time offset exists between the indication information and the synchronization information. The time offset may be predefined or configured, which is not limited herein. Based on this, the time domain location of the synchronization information described above may be the time offset or an absolute time. For example, the time domain location of the synchronization information may include at least one of but is not limited to the number of a radio frame where the synchronization information is located, the number of a subframe where the synchronization information is located, the number of a slot where the synchronization information is located, or the number of a symbol where the synchronization information is located.

It may be understood that upon reception of the indication information, the terminal device detects the synchronization information after the time offset or at an absolute time domain location of the synchronization information, and then realizes synchronization based on the synchronization information detected or determines uplink timing or downlink timing based on the synchronization information detected.

It may be understood that the process of realizing synchronization based on the synchronization information by the terminal device or determining uplink timing or downlink timing based on the synchronization information by the terminal device is similar to that in the existing NR technology, which will not be repeated herein.

It may be understood that in the NR system, for SSB frequency location synchronization rasters, in a frequency band multiple possible synchronization rasters may be included. In order to reduce the delay and power consumption caused by detection of the synchronization information by the terminal device, the indication information carried in the power supply signal may also indicate the frequency domain location of the synchronization information, such as the location of the synchronization raster. Optionally, the frequency domain location of the power supply signal is the same as or different from the frequency domain location of the synchronization information, e.g., the power supply signal is in the same frequency band as the synchronization information or in a different frequency band from the synchronization information, which is not limited in the disclosure.

Optionally, different indication information may have a correlation with different locations of the synchronization information, and the correlation relationship between the location of the indication information and the locations of the synchronization information may be predefined or configured, which is not limited in the disclosure.

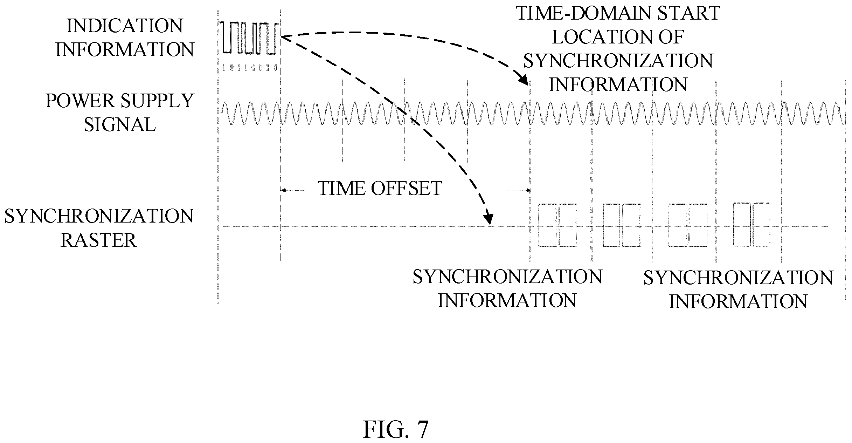

Exemplarily, FIG. 7 is a schematic diagram illustrating a correlation relationship between the location of indication information and the locations of synchronization information provided in embodiments of the present disclosure. As illustrated in FIG. 7, the synchronization information is transmitted periodically. The indication information indicates the time-domain start location of the synchronization information transmitted periodically. The synchronization information is in a different frequency band from the power supply signal.

It may be noted that the manner in which the indication information indirectly indicates the synchronization information is not limited to the above-described manner, i.e., the indication information indicates the location of the synchronization information, and the terminal device may receive the indication information at the location of the synchronization information. The manner in which the indication information indirectly indicates the synchronization information may be, but is not limited to that different indication information formats may indicate different synchronization information. The correlation between the indication information format and the synchronization information may be predefined or configured, which is not limited in the disclosure.

Optionally, no matter whether the indication information indicates the synchronization information directly or indirectly, the indication information may also indicate beam index information. The function of the beam index information is similar to the function of SSB index information in the NR system and is used for multi-beam scan, so that the terminal device can determine an appropriate beam direction. The beam direction may be but is not limited to an uplink beam direction or a downlink beam direction.

Optionally, no matter whether the indication information indicates the synchronization information directly or indirectly, the indication information may be periodic indication information.

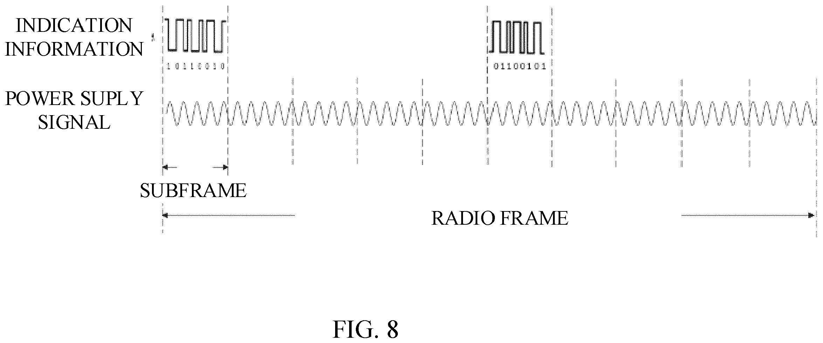

It may be understood that the periodic indication information refers to indication information periodically transmitted. For example, FIG. 8 is a schematic diagram illustrating time domain locations of periodic indication information provided in embodiments of the present disclosure. As illustrated in FIG. 8, the network device may modulate the carrier of the power-supply signal in multiple time units to carry the indication information, for example, the network device may modulate the carrier of the power supply signal in the 1st subframe and the 6th subframe of a radio frame, and leave the carrier of the power supply signal unmodulated in the other subframes of the radio frame.

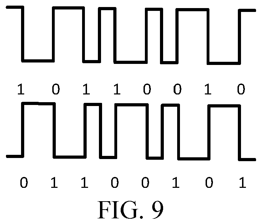

Optionally, the synchronization information may be a known sequence that varies with at least one of the radio frame, the subframe, the slot, or the symbol. In the case where the network device transmits the synchronization information, e.g., the synchronization information is carried in the power supply signal or in the indication information, the synchronization information includes at least one of, but is not limited to: a radio frame number corresponding to the synchronization information, a subframe number corresponding to the synchronization information, a slot number corresponding to the synchronization information, or a symbol number corresponding to the synchronization information. FIG. 9 is a diagram illustrating a waveform of synchronization information encoded with Manchester coding provided in embodiments of the present disclosure.

Optionally, the radio frame number corresponding to the synchronization information may be understood as the number of the radio frame in which the synchronization information is located, the subframe number corresponding to the synchronization information may be understood as the number of the subframe in which the synchronization information is located, the slot number corresponding to the synchronization information may be understood as the number of the slot in which the synchronization information is located, and the symbol number corresponding to the synchronization information may be understood as the number of the symbol in which the synchronization information is located.

Optionally, for the periodic indication information, the indication information in each period indicates synchronization information. The indication information in different periods indicates different synchronization information, which means that indication information in different time units is different.

Optionally, the time unit involved in the disclosure may be any of, but is not limited to: one or more subframes, one or more slots, one or more symbols, and the like.

Optionally, no matter whether the indication information directly or indirectly indicates the synchronization information, the indication information may be triggering indication information.

It may be understood that the triggering indication information refers to the indication information transmitted in response to triggering of a certain event. The triggering indication information is also referred to as event-triggering indication information.

It may be understood that the terminal device involved in the disclosure maintains synchronization depending on the power provided by the power supply signal. When the power supply signal is interrupted, no power is supplied to the terminal device, and thus synchronization previously realized may be lost. For example, in a time division duplex (TDD) system, in an uplink slot, the network device may interrupt the transmission of the power supply signal to receive uplink transmission from the terminal device, thus interrupting the transmission of the power supply signal. When no power is supplied to the terminal device, the synchronization previously realized may be lost. In this case, the network device needs to make the power supply signal carry the indication information that directly or indirectly indicates the synchronization information, to make the terminal device realize synchronization.

Exemplarily, in the case where the network device dynamically schedules downlink data transmission and the network device assumes that the terminal device does not realize synchronization before reception of downlink data, the network device may make the power supply signal carry the synchronization information during scheduling of downlink data, so as to facilitate the terminal device to receive the downlink data based on the synchronization information. In the case where the network device dynamically schedules uplink data transmission, since the network device needs to receive data in the uplink slot for scheduling, the terminal device cannot obtain the power supply signal. Therefore, it needs to make the power supply signal carry the synchronization information during the scheduling of the uplink data transmission, so as to facilitate the terminal device to harvest power, to obtain the synchronization information, and to transmit uplink data based on the synchronization information.

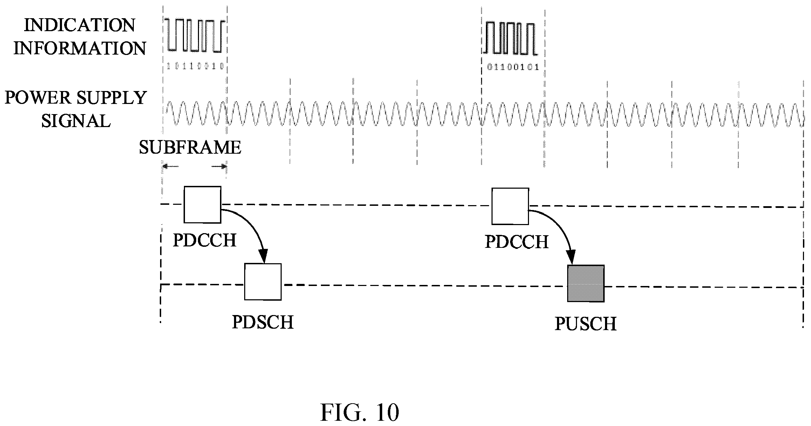

FIG. 10 is a schematic diagram illustrating triggering indication information provided in embodiments of the present disclosure. As illustrated in FIG. 10, when the network device schedules a physical downlink shared channel (PDSCH) or a physical uplink shared channel (PUSCH) via a physical downlink control channel (PDCCH), the network device makes the power supply signal carry the indication information in a subframe in which the PDCCH is transmitted, so that the terminal device can realize synchronization and timing alignment before performing PDSCH reception or PUSCH transmission.

It may be understood that, as can be seen from the above implementations, the indication information has a correlation with transmission of a first channel, e.g., the transmission of the first channel may trigger transmission of the indication information. The first channel may be a downlink control channel, an uplink data channel, or a downlink data channel, etc. The downlink control channel may be, but is not limited to, a PDCCH or a PDCCH that carries downlink control information (DCI). The uplink data channel may be, but is not limited to a PUSCH. The downlink data channel may be, but is not limited to a PDSCH. For example, in the above implementations, it may be considered that transmission of the PDCCH triggers transmission of the indication information. Alternatively, it may be considered that the transmission of the PDSCH or the PUSCH triggers the transmission of the indication information.

It may be understood that, as can be seen from the above implementations, a transmission time unit of the indication information has a correlation with a transmission time unit of the first channel. For example, as illustrated in the above implementations, the indication information is transmitted in a transmission subframe of the PDCCH. Alternatively, it may be considered that the indication information needs to be transmitted before reception of the PDSCH. Alternatively, it may be considered that the indication information needs to be transmitted before transmission of the PUSCH.

Optionally, the synchronization information may be a known sequence that varies with at least one of the radio frame, the subframe, the slot, or the symbol. In the case where the network device transmits the synchronization information, e.g., the synchronization information is carried in the power supply signal or in the indication information, the synchronization information includes at least one of, but is not limited to: a radio frame number corresponding to the synchronization information, a subframe number corresponding to the synchronization information, a slot number corresponding to the synchronization information, or a symbol number corresponding to the synchronization information. A waveform of synchronization information encoded with Manchester coding is illustrated in FIG. 9.

Optionally, for the triggering indication information, the synchronization information may include not an absolute time, but include a time offset between the transmission time unit of the indication information and the transmission time unit of the first channel. The terminal device may determine the transmission time unit of the first channel based on the time offset upon reception of the indication information.

In summary, in the present disclosure, the network device may make the indication information indicating the synchronization information be carried in the power supply signal, so that the terminal device can obtain synchronization information while obtaining power, thereby realizing synchronization between the terminal device and a network. Further, the indication information carried in the power supply signal may directly indicate the synchronization information, so that the terminal device does not need to wait for the synchronization information, thereby reducing the power consumption of the terminal device and reducing synchronization delay. Alternatively, the indication information carried in the power supply signal may indicate the location of the synchronization information, so that the terminal device can receive the indication information at the location of the synchronization information and does not need to perform continuous blind detection for the indication information, thereby also reducing power consumption of the terminal device.

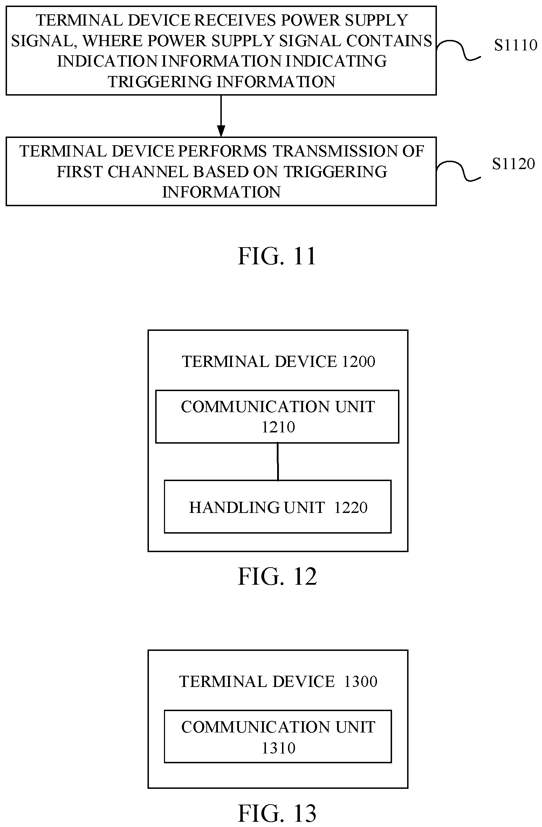

FIG. 11 is a flow chart of a method for wireless communication provided in another embodiment of the present disclosure. The method may be implemented by a terminal device with a backscatter communication function. The terminal device may be a zero-power device, such as a passive terminal or even a semi-passive terminal. Alternatively, the method may be implemented by a non-zero-power device, i.e., an ordinary device, where the ordinary terminal may perform backscatter communication in some cases and cannot realize synchronization through its own timing component such as a crystal resonator in some cases. As illustrated in FIG. 11, the method includes the following operations.

At S1110, the terminal device receives a power supply signal, where the power supply signal contains indication information indicating triggering information.

At S 1120, the terminal device performs transmission of a first channel based on the triggering information.

It may be understood that, for the illustration about the power supply signal, reference can be made to the above texts, which will not be repeated in the disclosure.

It may be understood that the indication information may directly or indirectly indicate the triggering information. For the illustration about that the indication information directly or indirectly indicates the triggering information, reference can be made to the above texts about that the indication information directly or indirectly indicates the triggering information, which will not be repeated in the disclosure.

Optionally, the triggering information is used to trigger the transmission of the first channel, that is, the triggering information is equivalent to timing information. Once the terminal device obtains the triggering information, the terminal device can perform the transmission of the first channel.

Optionally, the indication information has a correlation with the transmission of the first channel, e.g., the transmission of the first channel may trigger the transmission of the indication information. The first channel may be a downlink control channel, an uplink data channel, or a downlink data channel, etc. The downlink control channel may be, but is not limited to, a PDCCH or a PDCCH that carries DCI. The uplink data channel may be, but is not limited to a PUSCH. The downlink data channel may be, but is not limited to a PDSCH.

Exemplarily, in the case where the network device schedules the transmission of the PDSCH or the transmission of the PUSCH via the PDCCH, the transmission of the PDSCH or the transmission of the PUSCH may trigger the network device to make the triggering information be carried in the power supply signal, so that the terminal device can perform the transmission of the PDSCH or the transmission of the PUSCH upon obtaining the triggering information. The PDSCH or PUSCH may be understood as the first channel.

It may be understood that, as can be seen from the above implementations, the transmission time unit of the indication information has a correlation with the transmission time unit of the first channel. For example, the indication information needs to be transmitted before reception of the PDSCH. Alternatively, it may be considered that the indication information needs to be transmitted before transmission of the PUSCH.

In summary, in the present disclosure, the network device may make the indication information indicating the triggering information be carried in the power supply signal, so that the network device can trigger the transmission of the first channel while providing power to the terminal device.

FIG. 12 is a schematic diagram of a terminal device 1200 provided in embodiments of the present disclosure. As illustrated in FIG. 12, the terminal device 1200 includes a communication unit 1210 and a handling unit 1210.

The communication unit 1210 is configured to receive a power supply signal, where the power supply signal contains indication information indicating synchronization information.

The handling unit 1220 is configured to perform synchronization based on the synchronization information or determine uplink timing or downlink timing based on the synchronization information.

Optionally, the indication information is periodic indication information.

Optionally, indication information in different time units is different.

Optionally, the indication information is triggering indication information.

Optionally, the indication information has a correlation with transmission of a first channel.

Optionally, the indication information is triggered by the transmission of the first channel.

Optionally, a transmission time unit of the indication information has a correlation with a transmission time unit of the first channel.

Optionally, the indication information directly indicates the synchronization information.

Optionally, the indication information indicates a location of the synchronization information, where the location is used to determine the synchronization information.

Optionally, a time interval between the indication information and the synchronization information is predefined or configured.

Optionally, the location includes a time domain location and/or a frequency domain location.

Optionally, the frequency domain location of the power supply signal is the same or different from the frequency domain location of the synchronization information.

Optionally, the synchronization information includes at least one of: a radio frame number corresponding to the synchronization information, a subframe number corresponding to the synchronization information, a slot number corresponding to the synchronization information, or a symbol number corresponding to the synchronization information.

Optionally, the synchronization information includes a time offset between the transmission time unit of the indication information and the transmission time unit of the first channel.

Optionally, the power supply signal is generated by a network device or another device.

Optionally, the indication information further indicates beam index information.

Optionally, in some embodiments, the abovementioned communication unit may be a communication interface, a transceiver, an input/output interface of a communication chip or a system-on-chip. The abovementioned handling unit may be one or more processors.

It may be understood that the terminal device 1200 according to embodiments of the present disclosure may correspond to the terminal device in the corresponding method embodiment of FIG. 6. The above and other operations and/or functions of various units of the terminal device 1200 are respectively intended to realize the corresponding processes of the terminal device in the corresponding method embodiment of FIG. 6, which will not be repeated herein for the sake of simplicity.

FIG. 13 is a schematic diagram of a terminal device 1300 provided in embodiments of the present disclosure. As illustrated in FIG. 13, the terminal device 1300 includes a communication unit 1310 configured to receive a power supply signal, where the power supply signal contains indication information indicating triggering information. The terminal device performs transmission of a first channel based on the triggering information

Optionally, the indication information is triggered by the transmission of the first channel.

Optionally, a transmission time unit of the indication information has a correlation with a transmission time unit of the first channel.

Optionally, the power supply signal is generated by a network device or another device.

Optionally, in some embodiments, the abovementioned communication unit may be a communication interface, a transceiver, or an input/output interface of a communication chip or of a system-on-chip.

It may be understood that the terminal device 1300 according to embodiments of the present disclosure may correspond to the terminal device in the corresponding method embodiment of FIG. 11. The above and other operations and/or functions of various units of the terminal device 1300 are respectively intended to realize the corresponding processes of the terminal device in the corresponding method embodiment of FIG. 11, which will not be repeated herein for the sake of simplicity.

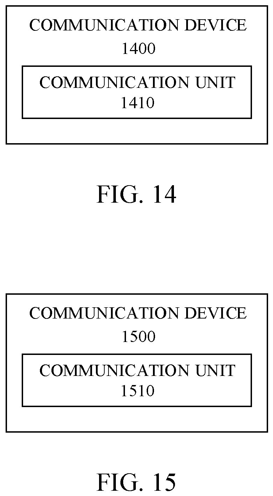

FIG. 14 is a schematic diagram of a communication device 1400 provided in embodiments of the present disclosure. As illustrated in FIG. 14, the communication device 1400 includes a communication unit 1410 configured to transmit a power supply signal, where the power supply signal contains indication information indicating synchronization information.

Optionally, the indication information is periodic indication information.

Optionally, indication information in different time units is different.

Optionally, the indication information is triggering indication information.

Optionally, the indication information has a correlation with transmission of a first channel.

Optionally, the indication information is triggered by the transmission of the first channel.

Optionally, a transmission time unit of the indication information has a correlation with a transmission time unit of the first channel.

Optionally, the indication information directly indicates the synchronization information.

Optionally, the indication information indicates a location of the synchronization information, where the location is used to determine the synchronization information.

Optionally, the time interval between the indication information and the synchronization information is predefined or configured.

Optionally, the location includes a time domain location and/or a frequency domain location.

Optionally, the frequency domain location of the power supply signal is the same as or different from the frequency domain location of the synchronization information.

Optionally, the synchronization information includes at least one of: a radio frame number corresponding to the synchronization information, a subframe number corresponding to the synchronization information, a slot number corresponding to the synchronization information, or a symbol number corresponding to the synchronization information.

Optionally, the synchronization information includes a time offset between the transmission time unit of the indication information and the transmission time unit of the first channel.

Optionally, the power supply signal is generated by a network device or another device.

Optionally, the indication information further indicates beam index information.

Optionally, in some embodiments, the abovementioned communication unit may be a communication interface, a transceiver, or an input/output interface of a communication chip or of a system-on-chip.

It may be understood that the communication device 1400 according to embodiments of the present disclosure may correspond to a network device or another device in the corresponding method embodiment of FIG. 6. The above and other operations and/or functions of the various units of the communication device 1400 are respectively intended to realize the corresponding processes of the network device or another device in the corresponding method embodiment of FIG. 6, which will not be repeated herein for the sake of simplicity.

FIG. 15 is a schematic diagram of a communication device 1500 provided in embodiments of the present disclosure. As illustrated in FIG. 15, the communication device 1500 includes a communication unit 1510 configured to transmit a power supply signal, where the power supply signal contains an indication information indicating triggering information.

Optionally, the indication information is triggered by transmission of a first channel.

Optionally, a transmission time unit of the indication information is correlated with a transmission time unit of the first channel.

Optionally, the power supply signal is generated by a network device or another device.

Optionally, in some embodiments, the abovementioned communication unit may be a communication interface, a transceiver, or an input/output interface of a communication chip or of a system-on-chip.

It may be understood that the communication device 1500 according to embodiments of the present disclosure may correspond to a network device or another device in the corresponding method embodiment of FIG. 11. The above and other operations and/or functions of the various units in the communication device 1500 are respectively intended to realize the corresponding processes of the network device or another device in the corresponding method embodiment of FIG. 11, which will not be repeated herein for the sake of simplicity.

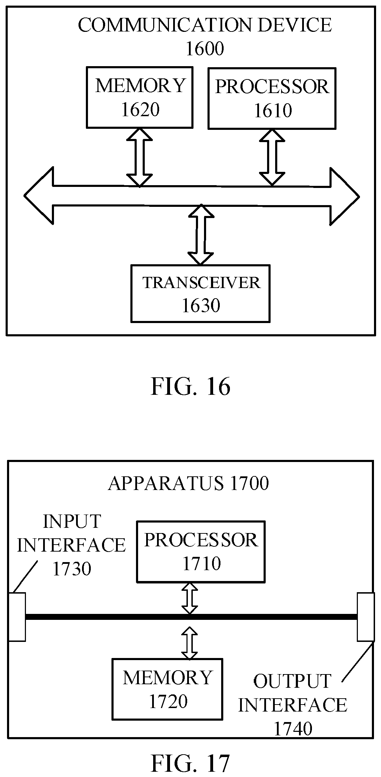

FIG. 16 is a schematic structural diagram of a communication device 1600 provided

in embodiments of the present disclosure. The communication device 1600 illustrated in FIG. 16 includes a processor 1610. The processor 1610 may invoke a computer program from a memory and run the computer program to perform the methods in embodiments of the present disclosure.

Optionally, as illustrated in FIG. 16, the communication device 1600 may also include a memory 1620. The processor 1610 may invoke a computer program from the memory 1620 and run the computer program to perform the methods in embodiments of the present disclosure.

The memory 1620 may be a separated device independent of the processor 1610, or may be integrated into the processor 1610.

Optionally, as illustrated in FIG. 16, the communication device 1600 may further include a transceiver 1630. The processor 1610 may control the transceiver 1630 to communicate with other devices, specifically to transmit information or data to other devices, or to receive information or data transmitted by other devices.

The transceiver 1630 may include a transmitter and a receiver. The transceiver 1630 may further include an antenna. The antenna may be one or more antennas.

Optionally, the communication device 1600 may specifically be a network device or another device of the embodiments of the present disclosure. The communication device 1600 may realize the corresponding processes realized by the network device or another device in the various methods of the embodiments of the present disclosure, which will not be repeated herein for the sake of simplicity.

Optionally, the communication device 1600 may specifically be a terminal device of the embodiments of the present disclosure, and the communication device 1600 may realize the corresponding processes realized by the terminal device in the various methods of the embodiments of the present disclosure, which will not be repeated herein for the sake of simplicity.

FIG. 17 is a schematic structural diagram of an apparatus provided in embodiments of the present disclosure. The apparatus 1700 illustrated in FIG. 17 includes a processor 1710. The processor 1710 may invoke a computer program from a memory and run the computer program to perform the methods in embodiments of the present disclosure.

Optionally, as illustrated in FIG. 17, the apparatus 1700 may further include a memory 1720. The processor 1710 may invoke a computer program from the memory 1720 and run the computer program to perform the methods in the embodiments of the present disclosure.

The memory 1720 may be a separated device independent of the processor 1710, or may be integrated into the processor 1710.

Optionally, the apparatus 1700 may further include an input interface 1730. The processor 1710 may control the input interface 1730 to communicate with other devices or chips, and specifically to obtain information or data transmitted by other devices or chips.

Optionally, the apparatus 1700 may further include an output interface 1740. The processor 1710 may control the output interface 1740 to communicate with other devices or chips, and specifically to output information or data to other devices or chips.

Optionally, the apparatus may be applied to a network device or another device in the embodiments of the present disclosure. The apparatus may realize the corresponding processes realized by the network device or another device in the various methods of the embodiments of the present disclosure, which will not be repeated herein for the sake of simplicity.

Optionally, the apparatus may be applied to the terminal device in the embodiments of the present disclosure, and the apparatus may realize the corresponding processes realized by the terminal device in the various methods of the embodiments of the present disclosure, which will not be repeated herein for the sake of simplicity.

Optionally, the apparatus related in the embodiments of the present disclosure may also be a chip. For example, the apparatus may also be a system-level chip, a system chip, a chip system, a system-on-a-chip, or the like.

It may be understood that the processor referred to herein may be an integrated circuit chip with signal-processing capabilities. During implementation, each step of the foregoing method may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, operations, and logic blocks disclosed in embodiments can be implemented or executed. The general purpose processor may be a microprocessor, or the processor may be any conventional processor or the like. The operations of the method disclosed in embodiments may be directly implemented as a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the operations of the above-mentioned method with the hardware thereof.

It may be understood that, the memory may be a volatile memory or a non-volatile memory, or may include both the volatile memory and the non-volatile memory. The non-volatile memory may be a ROM, a PROM, an erasable PROM (EPROM), an electrically EPROM (EEPROM), or a flash memory. The volatile memory can be a RAM that acts as an external cache. By way of example but not limitation, many forms of RAM are available, such as a static RAME (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). The memory of the system and the method described herein is intended to include, but is not limited to, these and any other suitable types of memory.

It may be understood that, the above description of the memory is intended for illustration rather than limitation. For example, the memory of embodiments may also be an SRAM, a DRAM, an SDRAM, a DDR SDRAM, an ESDRAM, an SLDRAM, a DR RAM, and so on. In other words, the memory of embodiments is intended to include, but is not limited to, these and any other suitable types of memory.

Embodiments of the disclosure further provide a computer readable storage medium. The computer readable storage medium is configured to store computer programs.

The computer readable storage medium is applicable to the network device or NodeB of embodiments. The computer programs are operable with a computer to implement the operations performed by the network device or NodeB described in the foregoing method embodiments, which will not be repeated herein for the sake of simplicity.

Alternatively, the computer readable storage medium is applicable to the mobile terminal/the terminal device of embodiments. The computer programs are operable with a computer to implement the operations performed by the mobile terminal/the terminal device described in the foregoing method embodiments, which will not be repeated herein for the sake of simplicity.

Embodiments of the present disclosure further provide a computer program product. The computer program product includes computer program instructions.

The computer program product is applicable to the network device or NodeB of the embodiments. The computer program instructions are operable with a computer to implement the operations performed by the network device or NodeB described in the foregoing method embodiments, which will not be repeated herein for the sake of simplicity.

Alternatively, the computer program product is applicable to the mobile terminal/the terminal device of embodiments. The computer program instructions are operable with a computer to implement the operations performed by the mobile terminal/the terminal device described in the foregoing method embodiments, which will not be repeated herein for the sake of simplicity.

Embodiments of the present disclosure further provide a computer program.

The computer program is applicable to the network device or NodeB of embodiments. The computer program is operable with a computer to implement the operations performed by the network device or NodeB described in the foregoing method embodiments, which will not be repeated herein for the sake of simplicity.

The computer program is applicable to the mobile terminal/the terminal device of embodiments. The computer program is operable with a computer to implement the operations performed by the mobile terminal/the terminal device described in the foregoing method embodiments, which will not be repeated herein for the sake of simplicity.

Those of ordinary skill in the art will appreciate that units and algorithmic operations of various examples described in connection with embodiments herein can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and simplicity, in terms of the working processes of the foregoing systems, apparatuses, and units, reference can be made to the corresponding processes of the above method embodiments, which will not be repeated herein.

It will be appreciated that the systems, apparatuses, and methods disclosed in embodiments herein may also be implemented in various other manners. For example, the above apparatus embodiments are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, apparatus or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in embodiments herein may be integrated into one processing unit or may be present as a number of physically separated units, and two or more units may be integrated into one.

If the functionalities are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

The above are merely detailed descriptions of the disclosure and are not intended to limit the scope of protection of the disclosure. Any modification and replacement made by those skilled in the art within the technical scope of the disclosure shall be included in the scope of protection of the disclosure. Therefore, the scope of protection of the disclosure should be stated in the scope of protection of the claims.

## Claims

1. A method for wireless communication, comprising:
receiving, by a terminal device, a power supply signal, the power supply signal containing indication information indicating synchronization information; and
performing, by the terminal device, synchronization based on the synchronization information, or determining, by the terminal device, uplink timing or downlink timing based on the synchronization information.

2. The method of claim 1, wherein the indication information is periodic indication information.

3. The method of claim 2, wherein indication information in different time units is different.

4. The method of claim 1, wherein the indication information is triggering indication information.

5. The method of claim 4, wherein the indication information has a correlation with transmission of a first channel.

6. The method of claim 5, wherein the indication information is triggered by the transmission of the first channel.

7. The method of claim 6, wherein a transmission time unit of the indication information has a correlation with a transmission time unit of the first channel.

8. The method of any one of claims 1 to 7, wherein the indication information directly indicates the synchronization information.

9. The method of any one of claims 1 to 7, wherein the indication information indicates a location of the synchronization information, wherein the location is used to determine the synchronization information.

10. The method of claim 9, wherein a time interval between the indication information and the synchronization information is predefined or configured.

11. The method of claim 9 or 10, wherein the location comprises a time domain location and/or a frequency domain location.

12. The method of claim 11, wherein a frequency domain location of the power supply signal is the same as or different from the frequency domain location of the synchronization information.

13. The method of any one of claims 1 to 12, wherein the synchronization information comprises at least one of: a radio frame number corresponding to the synchronization information, a subframe number corresponding to the synchronization information, a slot number corresponding to the synchronization information, or a symbol number corresponding to the synchronization information.

14. The method of any one of claims 5 to 7, wherein the synchronization information comprises a time offset between a transmission time unit of the indication information and a transmission time unit of the first channel.

15. The method of any one of claims 1 to 14, wherein the power supply signal is generated by a network device or another device.

16. The method of any one of claims 1 to 15, wherein the indication information further indicates beam index information.

17. A method for wireless communication, comprising:
receiving, by a terminal device, a power supply signal, the power supply signal containing indication information indicating triggering information; and
performing, by the terminal device, transmission of a first channel based on the triggering information.

18. The method of claim 17, wherein the indication information is triggered by the transmission of the first channel.

19. The method of claim 18, wherein a transmission time unit of the indication information has a correlation with a transmission time unit of the first channel.

20. The method of any one of claims 17 to 19, wherein the power supply signal is generated by a network device or another device.

21. A method for wireless communication, comprising:
transmitting, by a communication device, a power supply signal, the power supply signal containing indication information indicating synchronization information.

22. The method of claim 21, wherein the indication information is periodic indication information.

23. The method of claim 22, wherein indication information in different time units is different.

24. The method of claim 21, wherein the indication information is triggering indication information.

25. The method of claim 24, wherein the indication information has a correlation with transmission of a first channel.

26. The method of claim 25, wherein the indication information is triggered by transmission of a first channel.

27. The method of claim 26, wherein a transmission time unit of the indication information has a correlation with a transmission time unit of the first channel.

28. The method of any one of claims 21 to 27, wherein the indication information directly indicates the synchronization information.

29. The method of any one of claims 21 to 27, wherein the indication information indicates a location of the synchronization information, wherein the location is used to determine the synchronization information.

30. The method of claim 29, wherein a time interval between the indication information and the synchronization information is predefined or configured.

31. The method of claim 29 or 30, wherein the location comprises a time domain location and/or a frequency domain location.

32. The method of claim 31, wherein a frequency domain location of the power supply signal is the same as or different from the frequency domain location of the synchronization information.

33. The method of any one of claims 21 to 32, wherein the synchronization information comprises at least one of: a radio frame number corresponding to the synchronization information, a subframe number corresponding to the synchronization information, a slot number corresponding to the synchronization information, or a symbol number corresponding to the synchronization information.

34. The method of any one of claims 25 to 27, wherein the synchronization information comprises a time offset between a transmission time unit of the indication information and a transmission time unit of the first channel.

35. The method of any one of claims 21 to 34, wherein the power supply signal is generated by a network device or another device.

36. The method of any one of claims 21 to 35, wherein the indication information further indicates beam index information.

37. A method for wireless communication, comprising:
transmitting, by a communication device, a power supply signal, the power supply signal containing indication information indicating triggering information.

38. The method of claim 37, wherein the indication information is triggered by transmission of a first channel.

39. The method of claim 38, wherein a transmission time unit of the indication information has a correlation with a transmission time unit of a first channel.

40. The method of any one of claims 37 to 39, wherein the power supply signal is generated by a network device or another device.

41. A terminal device, comprising:
a communication unit configured to receive a power supply signal, the power supply signal containing indication information indicating synchronization information; and
a handling unit configured to perform synchronization based on the synchronization information, or determine uplink timing or downlink timing based on the synchronization information.

42. The terminal device of claim 41, wherein the indication information is periodic indication information.

43. The terminal device of claim 42, wherein indication information in different time units is different.

44. The terminal device of claim 41, wherein the indication information is triggering indication information.

45. The terminal device of claim 44, wherein the indication information has a correlation with transmission of a first channel.

46. The terminal device of claim 45, wherein the indication information is triggered by the transmission of the first channel.

47. The terminal device of claim 46, wherein a transmission time unit of the indication information has a correlation with a transmission time unit of the first channel.

48. The terminal device of any one of claims 41 to 47, wherein the indication information directly indicates the synchronization information.

49. The terminal device of any one of claims 41 to 47, wherein the indication information indicates a location of the synchronization information, wherein the location is used to determine the synchronization information.

50. The terminal device of claim 49, wherein a time interval between the indication information and the synchronization information is predefined or configured.

51. The terminal device of claim 49 or 50, wherein the location comprises a time domain location and/or a frequency domain location.

52. The terminal device of claim 51, wherein a frequency domain location of the power supply signal is the same as or different from the frequency domain location of the synchronization information.

53. The terminal device of any one of claims 41 to 52, wherein the synchronization information comprises at least one of: a radio frame number corresponding to the synchronization information, a subframe number corresponding to the synchronization information, a slot number corresponding to the synchronization information, or a symbol number corresponding to the synchronization information.

54. The terminal device of any one of claims 45 to 47, wherein the synchronization information comprises a time offset between a transmission time unit of the indication information and a transmission time unit of the first channel.

55. The terminal device of any one of claims 41 to 54, wherein the power supply signal is generated by a network device or another device.

56. The terminal device of any one of claims 41 to 55, wherein the indication information further indicates beam index information.

57. A terminal device comprising:
a communication unit configured to:
receive a power supply signal, the power supply signal containing indication information indicating triggering information; and
perform transmission of a first channel based on the triggering information.

58. The terminal device of claim 57, wherein the indication information is triggered by the transmission of the first channel.

59. The terminal device of claim 58, wherein a transmission time unit of the indication information has a correlation with a transmission time unit of the first channel.

60. The terminal device of any one of claims 57 to 59, wherein the power supply signal is generated by a network device or another device.

61. A communication device, comprising:
a communication unit configured to transmit a power supply signal, the power supply signal containing indication information indicating synchronization information.

62. The communication device of claim 61, wherein the indication information is periodic indication information.

63. The communication device of claim 62, wherein indication information in different time units is different.

64. The communication device of claim 61, wherein the indication information is triggering indication information.

65. The communication device of claim 64, wherein the indication information has a correlation with transmission of a first channel.

66. The communication device of claim 65, wherein the indication information is triggered by the transmission of the first channel.

67. The communication device of claim 66, wherein a transmission time unit of the indication information has a correlation with a transmission time unit of the first channel.

68. The communication device of any one of claims 61 to 67, wherein the indication information directly indicates the synchronization information.

69. The communication device of any one of claims 61 to 67, wherein the indication information indicates a location of the synchronization information, wherein the location is used to determine the synchronization information.

70. The communication device of claim 69, wherein a time interval between the indication information and the synchronization information is predefined or configured.

71. The communication device of claim 69 or 70, wherein the location comprises a time domain location and/or a frequency domain location.

72. The communication device of claim 71, wherein a frequency domain location of the power supply signal is the same as or different from the frequency domain location of the synchronization information.

73. The communication device of any one of claims 61 to 72, wherein the synchronization information comprises at least one of: a radio frame number corresponding to the synchronization information, a subframe number corresponding to the synchronization information, a slot number corresponding to the synchronization information, or a symbol number corresponding to the synchronization information.

74. The method of any one of claims 65 to 67, wherein the synchronization information comprises a time offset between a transmission time unit of the indication information and a transmission time unit of the first channel.

75. The communication device of any one of claims 61 to 74, wherein the power supply signal is generated by a network device or another device.

76. The communication device of any one of claims 61 to 75, wherein the indication information further indicates beam index information.

77. A communication device, comprising:
a communication unit configured to transmit a power supply signal, the power supply signal containing indication information indicating triggering information.

78. The method of claim 77, wherein the indication information is triggered by transmission of a first channel.

79. The method of claim 78, wherein a transmission time unit of the indication information has a correlation with a transmission time unit of the first channel.

80. The method of any one of claims 77 to 79, wherein the power supply signal is generated by a network device or another device.

81. A terminal device comprising a memory and a processor, the memory being configured to store a computer program, and the processor being configured to invoke and run the computer program in the memory to perform the method of any one of claims 1 to 20.

82. A communication device comprising a memory and a processor, the memory being configured to store a computer program, and the processor being configured to invoke and run the computer program in the memory to perform the method of any one of claims 21 to 40.

83. A chip comprising a processor, the processor being configured to invoke and run a computer program in a memory to enable a device equipped with the chip to perform the method of any one of claims 1 to 20.

84. A chip comprising a processor, the processor being configured to invoke and run a computer program in a memory to enable a device equipped with the chip to perform the method of any one of claims 21 to 40.

85. A computer-readable storage medium, the computer-readable storage medium being configured to store a computer program, the computer program enabling a computer to perform the method of any one of claims 1 to 20.

86. A computer-readable storage medium, the computer-readable storage medium being configured to store a computer program, the computer program enabling a computer to perform the method of any one of claims 21 to 40.

87. A computer program product, the computer program product comprising computer program instructions, the computer program instructions enabling a computer to perform the method of any one of claims 1 to 20.

88. A computer program product, the computer program product comprising computer program instructions, the computer program instructions enabling a computer to perform the method of any one of claims 21 to 40.

89. A computer program, the computer program enabling a computer to perform the method of any one of claims 1 to 20.

90. A computer program, the computer program enabling a computer to perform the method of any one of claims 21 to 40.
